# EUROPÄISCHE PATENTSCHRIFT

(11) **EP 0 668 827 B1**
(45) Veröffentlichungstag und Bekanntmachung des Hinweises auf die Patenterteilung: **23.04.1997**
(21) Anmeldenummer: 94901839.4
(22) Anmeldetag: 22.11.1993
(51) Int. Cl.: B60T 8/50, B60T 8/42, B60T 8/36

(54) **BREMSDRUCKREGELVORRICHTUNG**
BRAKE PRESSURE REGULATOR
DISPOSITIF REGULATEUR DE FREINAGE

(30) Priorität: 21.11.1992 DE 4239178
(43) Veröffentlichungstag der Anmeldung: 30.08.1995
(73) Patentinhaber: ITT Automotive Europe GmbH, 60488 Frankfurt am Main (DE)
(72) Erfinder: BECK, Erhard, D-35781 Weilburg (DE); SONNENSCHEIN, Georg, D-65760 Eschborn (DE)
(86) Internationale Anmeldenummer: EP9303267
(87) Internationale Veröffentlichungsnummer: WO9412376

(56) Entgegenhaltungen:
- EP-A- 0 171 901
- WO-A-80/01783
- WO-A-90/06873
- DE-A- 4 108 028
- US-A- 4 846 535
- PATENT ABSTRACTS OF JAPAN vol. 12, no. 302 (M-732)(3149) 17. August 1988 & JP,A,63 078 856 (AISIN SEIKI) 8. April 1988
- PATENT ABSTRACTS OF JAPAN vol. 10, no. 151 (M-483)(2208) 31. Mai 1986 & JP,A,61 006 055 (AKEBONO) 11. November 1986

## Beschreibung

Die Erfindung betrifft eine Bremsdruckregelvorrichtung mit Antiblockierregelung und/oder Antriebsschlupfregelung, insbesondere für Kraftfahrzeuge nach dem Oberbegriff des Anspruchs 1.

Aus der DE 41 08 028 A1 ist bereits eine Bremsdruckregelvorrichtung bekannt, die ein im Ventilaufnahmekörper integriertes und hydraulisch betätigbares Schieberventil aufweist, um während der elektromagnetischen Betätigung der Einlaß- und Auslaßventile die Ventilschaltgeräusche zu dämpfen. Hierzu ist das Schieberventil mit einer Blendenbohrung versehen, die in einer Ringnut am Schieberventil angeordnet ist, welche in einem die Druckmittelquelle mit dem Einlaßventil verbindenden Druckmittelbereich wirksam ist. Die Stege der Ringnut bilden die den Volumenstrom begrenzenden Regelkanten, sobald das Schieberventil die von einer Druckfeder bestimmte Grundposition verläßt. Eine weitere Ringnut am Schieberventil stellt schließlich die Verbindung zu dem in der Grundstellung hydraulisch geöffneten Einlaßventil her.

Es hat sich gezeigt, daß bei der hydraulischen Betätigung des Schieberventils Leckageströme an der metallisch gedichteten Mantelfläche nicht auszuschließen sind, die zu einer unerwünschten Druckerhöhung vor dem Einlaßventil führen können, solange dieses geschlossen ist. Daher steht beim Öffnen des Einlaßventils ein nicht unerheblicher Druck an, der sich auf das Geräuschverhalten nachteilig auswirkt.

Aus der gattungsbildenden JP-A-61-6055 geht eine Bremsdruckregelvorrichtung hervor, die über ein Schieberventil verfügt, das zwischen einem Bremsdruckgeber und einem den Bremsdruck zur Radbremse steuernden Einlaßventil in die Druckmittelverbindung eingesetzt ist. Zu beiden Stirnflächen des Schieberventils steht in der offenen Schaltstellung des Einlaßventils der vom Bremsdruckgeber vorgegebene Radbremsdruck an. In einer blockiergeschützten Bremsdruckregelphase, in der das Einlaßventil die Druckmittelverbindung zwischen dem Bremsdruckgeber und der Radbremse trennt und das dem Einlaßventil nachgeschaltete Auslaßventil den Druckabbau durch Öffnen einer Druckmittelverbindung zu einem Druckmittelspeicher bewirkt, entsteht zu beiden Stirnseiten des Schieberventils einen Druckdifferenz, die das Schieberventil in seine den Bremsdruckgeber von dem nachgeschalteten Hydrauliksystem trennenden Sperrstellung bewegt. Die Sperrstellung des Schieberventils wird durch einen Kegeldichtsitz am Schieberventil bewirkt. Leckageströme an der metallisch gedichteten Kegeldichtfläche sind nicht auszuschließen, die zu einer unerwünschten Druckerhöhung vor dem geschlossenen Einlaßventil führen können.

Ein Schieberventil für eine Bremsdruckregelvorrichtung, das ausschließlich über eine metallische Abdichtung seiner Mantelfläche innerhalb seines Gehäuses verfügt, ist aus der JP-A-63-78856 bekannt. Zwischen beiden Stirnflächen des Schieberventils ist der Schaft mit einer Ringnut versehen, die mit ihrer Steuerkante den Druckmittelzulauf vom Bremsdruckgeber zur Radbremse bestimmt. Die eine Stirnfläche ist dem Druck des Bremsdruckgebers ausgesetzt, während die weitere Stirnfläche in Abhängigkeit von der hydraulisch betätigten Stellung des Einlaßventils entweder gleichfalls dem Druck des Bremsdruckgebers oder dem geregelten Druck in der Radbremse ausgesetzt ist. Das Schieberventil trennt den Bremsdruckgeber von der angeschlossenen Radbremse, sobald in einer Blockierschutzregelung der Druck in der Radbremse abgesenkt wird, da durch den auf der entgegengelegenen Stirnseite am Schieberventil anstehenden fußkraftproportionalen Druck ein für die Betätigung des Schieberventils wirksame Druckdifferenz entsteht. Durch die ausschließliche metallische Abdichtung des Schieberventils im Gehäuse sind Leckageströme an der metallisch gedichteten Mantelfläche nicht auszuschließen,so daß es zu einem unerwünschten Nachströmen von Druckmittel in Richtung des hydraulisch betätigten Einlaßventils während einer Blockierschutzregelung kommt.

Sowohl die JP-A-63-78856 als auch die JP-A-61-6055 offenbaren ausschließlich hydraulisch betätigte Trennventile, die während einer blockierschutzfreien Betätigung der Bremse wirkungslos in ihrer abbildungsgemäßen Grundstellung verharren. Die Möglichkeit einer Regelung des von dem Bremsdruckgeber zur Radbremse zugeführten Druckmittelvolumens ist nicht vorgesehen.

Es ist daher die Aufgabe der Erfindung, mit geringen baulichen Veränderungen an der Bremsdruckregelvorrichtung die vorgenannten Nachteile zu beseitigen, um unter allen Betriebszuständen eine wirkungsvolle Reduzierung der Ventilschaltgeräusche zu erzielen.

Diese Aufgabe wird erfindungsgemäß durch die den Patentanspruch 1 kennzeichnenden Merkmale gelöst. Die Erfindung basiert somit auf dem Gedanken durch geeignete Anordnung von Druckmittelkanälen und Dichtelementen Leckageströme zu verhindern und die Druckmittelströmung gezielt zu führen.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: eine vereinfachte Darstellung des Schieberventils im Längsschnitt mit den erforderlichen Druckmittelanschlüssen zu den Funktionselementen einer Bremsdruckregelvorrichtung,
- Figur 2: eine weitere Ausführungsform des Schieberventils,
- Figur 3: ein in einer Führungsbuchse integriertes Schieberventil,
- Figur 4: ein Schieberventil mit Vordrosselstufe und entsprechender Dichtungsanordnung.

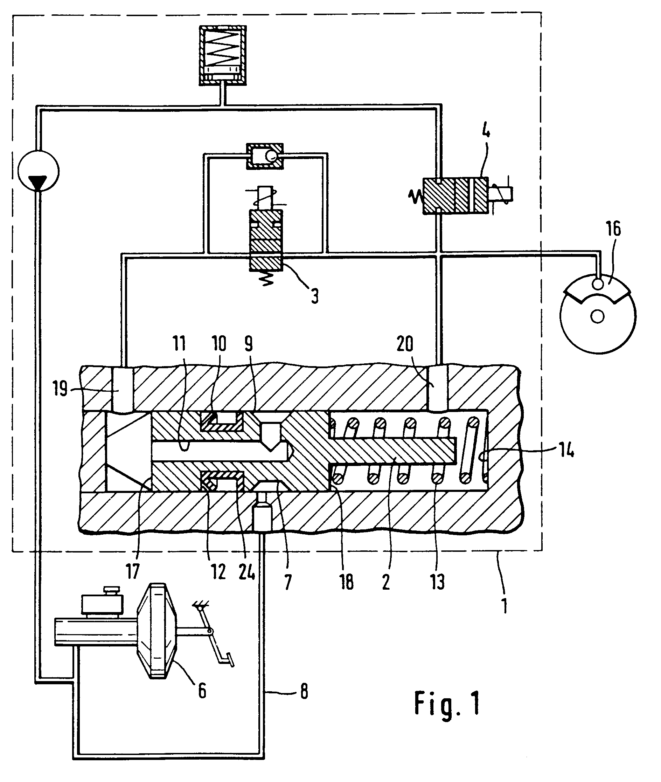

Die Figur 1 zeigt das kolbenförmige Schieberventil 2 mit einer abbildungsgemäß zur linken der die Druckmittelquelle 6 mit dem Einlaßventil 3 verbindende Ringnut 7 angeordneten weiteren Ringnut 12, die mit einer Ringdichtung 10 versehen ist. Die Ringdichtung 10 ist derart gestaltet, daß diese einen Leckagestrom von der Druckmittelquelle 6 zum Einlaßventil 3 sperrt, jedoch eine hydraulische Verbindung vom Einlaßventil 3 zur Druckmittelquelle 6 freigeben kann. Die hydraulische Schaltung zeigt in überschaubarer Ansicht und zum besseren Verständnis lediglich die Kanalführung zur Betätigung einer schlupfgeregelten Radbremse symbolisch, wobei die zur Schlupfregelung erforderlichen Einlaß- und Auslaßventile 3, 4 in Abhängigkeit von der jeweils zu regelnden Druckhalte-, Druckabbau- und Druckaufbauphase elektromagnetisch angesteuert werden. Das vom Auslaßventil 4 abgelassene Druckmittelvolumen gelangt auf allgemein bekannte Weise über einen Zwischenspeicher zu einer Pumpe, die das Druckmittel wieder dem Radbremskreis zuführt.

### Funktionsweise:

Sobald der an der linken Stirnfläche 17 des Schieberventils 2 anstehende Druck größer ist als der auf die rechte Stirnfläche 18 wirksame Druck des Druckmittelverbrauchers 16 (Einlaßventil 3 ist geschlossen, Auslaßventil 4 ist offen) bewegt sich das Schieberventil 2 gegen die Wirkung der Druckfeder 13 nach rechts, bis die erste Dichtkante 24 der Ringdichtung 10 mit dem an der Druckmittelquelle 6 angeschlossenen Zulaufkanal 8 in Überdeckung gelangt. Da der Volumenstrom aus der Druckmittelquelle 6 damit gesperrt ist, verharrt das Schieberventil 2 in einer Zwischenstellung, die damit infolge der Trennventilwirkung den vor dem Einlaßventil 3 anstehenden Druck begrenzt. Die als Rückschlagventil wirksame zweite Dichtkante der Ringdichtung 10 gewährleistet bei Bedarf eine Druckentlastung des Druckmittelverbrauches (Radbremse 16) über das parallel zum Einlaßventil 3 geschaltete Rückschlagventil, sobald das Druckniveau der Druckmittelquelle (Hauptzylinder) 6 abgesenkt wird. Das Schieberventil 2 gelangt sodann wieder infolge der Wirkung der Druckfeder 13 in die abbildungsgemäße linke Grundposition.

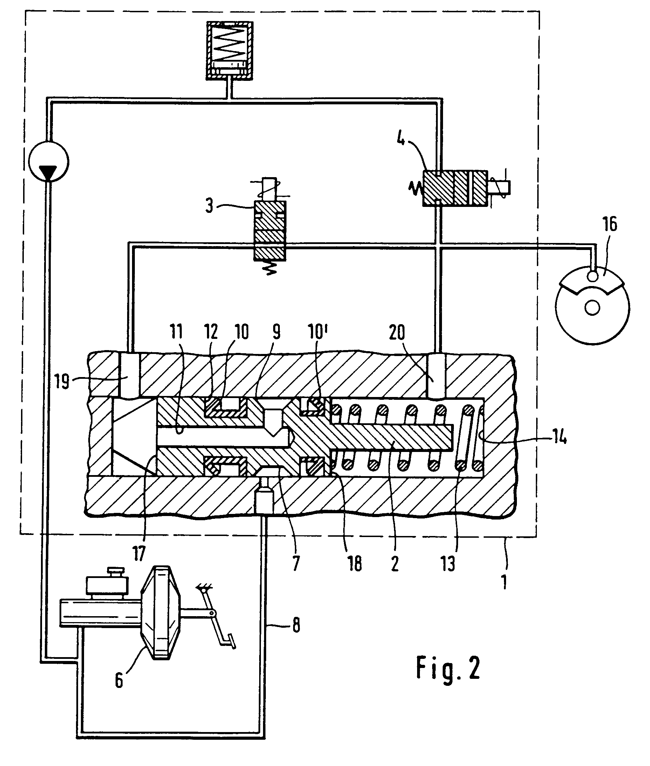

Die Figur 2 zeigt abweichend in Aufbau und Funktion zur Figur 1 ein Schieberventil 2, das abbildungsgemäß zur rechten der die Steuerkante 9 aufweisenden Ringnut 7 eine weitere Ringdichtung 10' aufnimmt, die abhängig von der Druckdifferenz zwischen der Druckmittelquelle (Hauptzylinder) 6 und dem Druckmittelverbraucher (Radbremse) 16 unter Umgehung des Einlaßventils 3 ein direktes Rückströmen von Druckmittel aus der Radbremse 16 in Richtung des Hauptzylinders 6 ermöglicht. Dies hat den Vorteil, daß das in Figur 1 parallel zum Einlaßventil 3 angeordnete Rückschlagventil auf einfache Weise raumsparend im Schieberventil 2 als Manschettendichtung integriert werden kann.

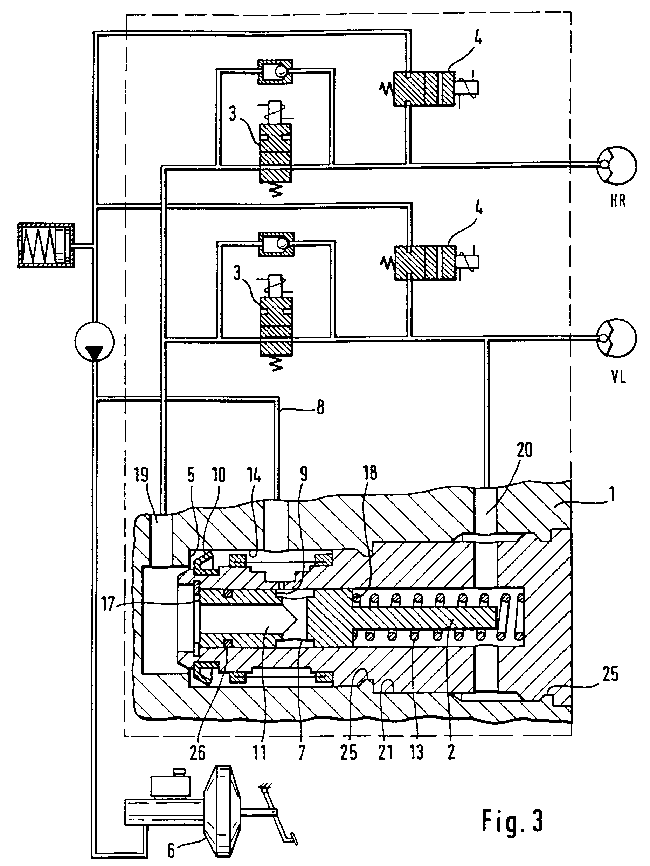

Die Figur 3 zeigt ein weiteres Ausführungsbeispiel eines in einer Führungsbuchse 21 angeordneten Schieberventils 2. Die Führungsbuchse 21 ist in die als Stufenbohrung ausgeführte Aufnahmebohrung 14 des Ventilaufnahmekörpers 1 eingestemmt und mit einer als Rückschlagventil wirksamen Ringdichtung 10 versehen, die einen Leckagestrom (Kurzschlußstrom) von der Druckmittelquelle (Hauptzylinder) 6 in Richtung des Zulaufs zum Einlaßventil 3 verhindert. Befindet sich das Schieberventil 2 infolge der Druckdifferenz zwischen der linken und rechten Stirnfläche 17, 18 in einer den Druckmittelfluß vom Hauptzylinder 6 zum Einlaßventil 3 abregelnden rechten Stellung, so kann zum Zwecke eines schnellen Druckabbaus in der Radbremse 16 das Schieberventil 2 umgangen werden, indem durch absenken des Drucks im Hauptzylinder 6 das an der Radbremse 16 anstehende Druckmittelvolumen über die als Rückschlagventil wirksame Ringdichtung 10 zur Druckmittelquelle 6 gelangen kann. Die hydraulische Schaltungsverbindung des Schieberventils 2 für die gezeigte Bremskreisdiagonale entspricht im wesentlichen der in Figur 1 und 2 gezeigten Ausführungsform, wobei der Schieberkolben bei Bedarf mit der nach Figur 1 und 2 vorgeschlagenen Ringdichtung oder mit Ringdichtungen mit abgewandelter Kontur, beispielsweise wie die Abbildung zeigt mit einem O-Ring 26 versehen werden kann. Die Verwendung eines in einer Führungsbuchse 21 angeordneten Schieberventils 2 hat den Vorteil, daß die Funktionsfähigkeit außerhalb der Bremsdruckregelvorrichtung geprüft werden kann und die Aufnahmebohrung 14 im Ventilaufnahmekörper 1 mit einer relativ günstig herzustellenden Passung versehen werden kann. Selbstverständlich sind eine Vielzahl von an sich bekannten Abdichtungsvarianten für die Führungsbuchse 21 im Ventilaufnahmekörper 1 möglich, wovon jedoch die Abdichtung mittels einer selbsteinscherenden Verbindung als besonders zweckmäßig erachtet wird. Zu diesem Zweck weist die Führungsbuchse 21 einen in Richtung der Sackbohrung verjüngten und mit Ausnehmungen 25 versehenen Schaft auf, der das relativ weichere Werkstoffvolumen des Ventilaufnahmekörpers 1 in ringförmig an der Führungshülse 21 umlaufenden Ausnehmungen 25 druckmitteldicht und fest verdrängt, wobei zwischen den Ausnehmungen 25 gleichzeitig ein Ringraum gebildet ist, der die Verbindung des dem Einlaßventil 3 nachgeschalteten Druckmittelkanals 20 mit der von der Druckfeder 13 beaufschlagten Stirnfläche 18 herstellt.

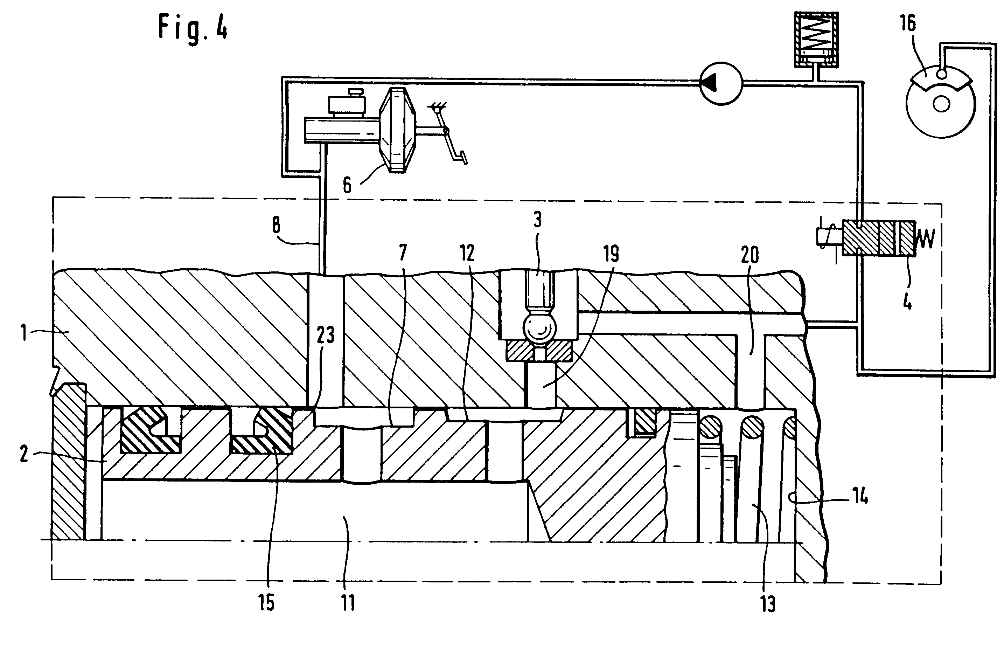

In Figur 4 ist eine weitere zweckmäßige Ausführungsform zur Abdichtung eines direkt in der Aufnahmebohrung 14 des Ventilaufnahmekörpers 1 eingesetzten Schieberventils 2 dargestellt. Die gezeigte Abdichtung des Schieberventils 2 eignet sich vorteilhaft für eine Kanalaufteilung, die eine hydraulische Verbindung der Druckmittelquelle (Hauptylinder) 6 mit dem Zulauf zum Einlaßventil 3 über zwei am Schieberventil 2 angeordnete Ringnuten 7, 12 bedingt, so daß abweichend von den in den Figuren 1 bis 3 vorbeschriebenen Druckmittelanschlüssen am Schieberventil 2, die beiden jeweils zum Einlaßventil 3 führenden Druckmittelkanälen 19, 20 baulich nebeneinander und parallel in die Aufnahmebohrung 14 einmünden und der Zulaufkanal 8 des Hauptzylinders (Druckmittelquelle) 6 hierzu baulich außerhalb und in Reiheschaltung zu den Druckmittelkanälen 19, 20 angeordnet ist. Die gezeigte Abdichtung des Schieberventils 2 besteht aus einer beispielhaft als Manschette dargestellten Ringdichtung 15, die in Betätigungsrichtung des Schieberventils 2 funktionell nachgeschaltet und damit links neben der mit dem Zulaufkanal 8 korrespondierenden ersten Ringnut 7 angeordnet ist. Beim Schließen des Einlaßventils 3 und Einleiten des Druckabbaus in der Radbremse 16 durch Öffnen des Aulaßventils 4, bewegt sich das Schieberventil 2 infolge der Druckdifferenz entgegen der Druckfeder 13 abbildungsgemäß nach rechts. Dabei gelangt die Ringdichtung 15, infolge des als Vordrosselstufe 23 wirksamen Bundes an der ersten Ringnut 7, druckausgeglichen in Überdeckung mit dem Zulaufkanal 8 und verschließt danach den Zulaufkanal 8 ohne die Gefahr einem hydraulischen Differenzdruck ausgesetzt zu werden, der ansonsten die Ringdichtung zerstörend in den Zulaufkanal 8 pressen würde. Solange das Einlaßventil 3 zum Zwecke der Druckabsenkung in der Radbremse 16 verschlossen ist, verharrt das hydraulisch aktivierte Schieberventil 2 in seiner den Hauptzylinder vom Einlaßventil 3 trennenden rechten Anschlagstellung, ohne daß sich ein Leckagestrom an der Ringdichtung 15 einstellen kann. Damit ist eine Druckerhöhung vor dem Einlaßventil 3 verhindert und es sind beim erneuten Öffnen des Einlaßventils 3 unerwünschte Ventilgeräusche vermieden. Sobald das Einlaßventil 3 öffnet, bewegt sich das Schieberventil 2 unter Wirkung der Druckfeder 13 wieder in Richtung seiner Ruheposition, wobei die an der ersten Ringnut 15 vorgesehene Vordrosselstufe 23 für einen genügend hohen Druckabfall zwischen dem Rücken der Ringdichtung 15 und dem im Bereich des Einlaßventils 3 herrschenden Druck sorgt, um ein differenzdruckabhängiges Eindringen der Dichtlippe in den Zulaufkanal 8 zu verhindern.

### Bezugszeichenliste

- 1: Ventilaufnahmekörper
- 2: Schieberventil
- 3: Einlaßventil
- 4: Auslaßventil
- 5: Ringkanal
- 6: Druckmittelquelle (Hauptzylinder)
- 7: erste Ringnut
- 8: Zulaufkanal
- 9: Steuerkante
- 10: Ringdichtung
- 10': Ringdichtung
- 11: Druckmittelkanal
- 12: Ringnut
- 13: Druckfeder
- 14: Aufnahmebohrung
- 15: Dichtelement
- 16: Druckmittelverbraucher (Radbremse)
- 17: Stirnfläche
- 18: Stirnfläche
- 19: Druckmittelkanal
- 20: Druckmittelkanal
- 21: Führungsbuchse
- 22: Ringfilter
- 23: Vordrosselstufe
- 24: Dichtkante
- 25: Ausnehmung
- 26: O-Ring

## Patentansprüche

1. Bremsdruckregelvorrichtung mit Antiblockierregelung und/oder Antriebsschlupfregelung, insbesondere für Kraftfahrzeuge, mit einem mehrere Ein- und Auslaßventile (3,4) sowie Druckmittelkanäle (19,20) aufnehmenden Ventilaufnahmekörper (1), mit einer Stromzuführungsvorrichtung für die Strombeaufschlagung der elektromagnetisch betätigbaren Einlaß- und Auslaßventile (3,4), mit einem in einer Aufnahmebohrung (14) im Ventilaufnahmekörper (1) integrierten und hydraulisch betätigbaren Schieberventil (2), das in Abhängigkeit von der Schaltstellung der Ein- und Auslaßventile (3,4) das Druckmittelvolumen zwischen einer Druckmittelquelle (6) und einem Druckmittelverbraucher (16) regelt, wobei zu beiden Stirnflächen (17, 18) des Schieberventils (2) in die Aufnahmebohrung (14) Druckmittelkanäle (19) einmünden, die über ein in der Ruhestellung auf ungehinderten Durchlaß geschaltetes Einlaßventil (3) mit dem Druckmittelverbraucher (16) hydraulisch verbunden sind, wobei der Druckmittelverbraucher (16) mit dem druckmittelverbraucherseitigen Anschluß des Einlaßventils (3) verbunden ist und wobei das Schieberventil (2) eine mit einer Steuerkante (9) versehene Ringnut (7) aufweist, die über einen in die Aufnahmebohrung (14) einmündenden Zulaufkanal (8) die Druckmittelquelle (6) mit dem Einlaßventil (3) verbindet, dadurch **gekennzeichnet**, daß in die Aufnahmebohrung (14) wenigstens eine Ringdichtung (10) eingesetzt ist, die in der hydraulisch betätigten Stellung des Schieberventils (2) die hydraulische Verbindung von der Druckmittelquelle (6) zum druckmittelquellenseitigen Anschluß des Einlaßventil (3) sperrt und die hydraulische Verbindung vom druckmittelquellenseitigen Anschluß des Einlaßventil (3) zur Druckmittelquelle (6) freigibt (Figur 1 bis 4).

2. Bremsdruckregelvorrichtung nach Anspruch 1, dadurch **gekennzeichnet**, daß zwei Ringdichtungen (10, 10') vorgesehen sind, die beiderseits der Ringnut (7) am Schieberventil (2) angeordnet sind (Figur 2).

3. Bremsdruckregelvorrichtung nach Anspruch 1 oder 2, dadurch **gekennzeichnet**, daß die Ringdichtung (10) in einer weiteren Ringnut (12) am Schieberventil (2) eingesetzt ist, die mit dem Zulaufkanal (8) der Druckmittelquelle (6) in Überdeckung bringbar ist (Figur 1, 2).

4. Bremsdruckregelvorrichtung nach Anspruch 1, dadurch **gekennzeichnet**, daß die Ringdichtung (10) am Außenumfang einer das Schieberventil (2) aufnehmenden Führungsbuchse (21) befestigt ist, die mit einer Gehäusestufe der Aufnahmebohrung (14) in Eingriff bringbar ist (Figur 3).

5. Bremsdruckregelvorrichtung nach Anspruch 4, dadurch **gekennzeichnet**, daß die Führungsbuchse (21) einen Ringfilter (22) aufweist, der zwischen dem Zulaufkanal (8) und der die Steuerkante (9) aufweisenden Ringnut (7) positioniert ist (Figur 3).

6. Bremsdruckregelvorrichtung nach Anspruch 1, dadurch **gekennzeichnet**, daß die Ringdichtung (10) im Abschnitt der am Einlaßventil (3) anschließbaren Aufnahmebohrung (14) an einer Führungsbuchse (21) befestigt ist (Figur 3).

7. Bremsdruckregelvorrichtung nach Anspruch 6, dadurch **gekennzeichnet**, daß zwischen der Führungsbuchse (21) und der Aufnahmebohrung (14) ein Ringraum (5) gelegen ist, der von der Ringdichtung (10) verschließbar ist (Figur 3).

8. Bremsdruckregelvorrichtung nach Anspruch 6, dadurch **gekennzeichnet**, daß die Aufnahmebohrung (14) als nach außen erweiterte Stufenbohrung ausgebildet ist, die mit der Mantelfläche der Führungsbuchse (21) abschnittsweise formschlüssig in Eingriff bringbar ist (Figur 3).

9. Bremsdruckregelvorrichtung nach Anspruch 1, dadurch **gekennzeichnet**, daß zwischen der ersten Ringnut (7) und einem das Schieberventil (2) gegenüber der Aufnahmebohrung (14) abdichtenden Dichtelement (15) eine Vordrosselstufe (23) angeordnet ist, die bei Überdeckung des Dichtelementes (15) mit dem Zulaufkanal (8) der Druckmittelquelle (6) beiderseits des Dichtelementes (15) einen Druckausgleich herstellt.

10. Bremsdruckregelvorrichtung nach Anspruch 9, dadurch **gekennzeichnet**, daß die an der ersten Ringnut (7) gelegene Vordrosselstufe (23) einen definierten Ringspalt aufweist, der zwischen einem Bund am Schieberventil (2) und der Aufnahmebohrung (14) gebildet ist.

11. Bremsdruckregelvorrichtung nach Anspruch 9, dadurch **gekennzeichnet**, daß das Dichtelement als von der Druckmittelquelle (6) in Richtung des Einlaßventils (3) sperrend wirkende Dichtmanschette ausgeführt ist.

## Claims

1. A brake pressure regulator comprising an anti-locking control and/or a traction slip control system, in particular, for automotive vehicles, including a valve-receiving body (1) accommodating a plurality of inlet and outlet valves (3,4) and pressure fluid channels (19,20), further including a current supply means for applying current to the electromagnetically actuatable inlet and outlet valves (3,4), a hydraulically actuatable slide valve (2) integrated into a receiving bore (14) within the valve accommodating body (1) to control the pressure fluid volume between a pressure fluid source (6) and a pressure fluid consumer (16) in response to the switching position of the inlet and outlet valves (3,4), with pressure fluid channels (19) terminating on both front faces (17,18) of the slide valve (2) into the receiving bore (14), which pressure fluid channels (19) are hydraulically connected to the pressure fluid consumer (16) by way of an inlet valve (3) switched to unimpeded passage in the resting position, the pressure fluid consumer (16) being connected to the port of the inlet valve (3) on the pressure fluid consumer side, and the slide valve (2) including an annular groove (7) provided with a control edge (9) and connecting the pressure fluid source (6) to the inlet valve (3) by way of a feed-in channel (8) terminates into the accommodating bore (14),
characterized in that the accommodating bore (14) houses at least one gasket (10) which, in the hydraulically actuated position of the slide valve (2), locks the hydraulic connection between the pressure fluid source (6) and the port of the inlet valve (3) on the pressure fluid source side and releases the hydraulic connection between the port of the inlet valve (3) on the pressure fluid source side and the pressure fluid source (6) (Figures 1 to 4).

2. A brake pressure control as claimed in claim 1, characterized in that two gaskets (10,10') are provided which are arranged on both sides of the annular groove (7) on the slide valve (2) (Figure 2).

3. A brake pressure control as claimed in claim 1 or 2, characterized in that the gasket (10) is inserted in another annular groove (12) on the slide valve (2) which can be placed in overlapping relationship with the feed-in channel (8) of the pressure fluid source (6) (Figures 1 and 2).

4. A brake pressure control as claimed in claim 1, characterized in that the gasket (10) is fixed to the outer circumference of a guiding sleeve (21) accommodating the slide valve (2) which can be placed in engagement with a housing step of the receiving bore (14) (Figure 3).

5. A brake pressure control as claimed in claim 4, characterized in that the guiding sleeve (21) includes an annular filter (22) which is positioned between the feed-in channel (8) and the annular groove (7) including the control edge (9) (Figure 3).

6. A brake pressure control as claimed in claim 1, characterized in that the gasket (10) is fixed to a guiding sleeve (21) in the section of the receiving bore (14) which can be connected to the inlet valve (3) (Figure 3).

7. A brake pressure control as claimed in claim 6, characterized in that an annular chamber (5) sealable by the gasket (10) is provided between the guiding sleeve (21) and the receiving bore (14) (Figure 3).

8. A brake pressure control as claimed in claim 6, characterized in that the receiving bore (14) is designed as an externally expanded stepped bore that can be placed, section-wise, in engagement with the cylindrical surface of the guiding sleeve (21) in a form-locking way (Figure 3).

9. A brake pressure control as claimed in claim 1, characterized in that a prerestrictor step (23) is arranged between the first annular groove (7) and a sealing element (15) sealing the slide valve (2) against the receiving bore (14) to produce a pressure balance on both sides of the sealing element (15) when the sealing element (15) is in overlapping relationship with the feed-in channel (8) of the pressure fluid source (6).

10. A brake pressure control as claimed in claim 9, characterized in that the prerestrictor step (23) provided on the first annular groove (7) comprises a defined annular gap formed between a shoulder on the slide valve (2) and the accommodating bore (14).

11. A brake pressure control as claimed in claim 9, characterized in that the sealing element is configured as a sealing cup exerting a blocking effect between the pressure fluid source (6) and the inlet valve (3).

## Revendications

1. Dispositif de régulation de la pression de freinage à régulation antiblocage et/ou régulation du glissement de traction, notamment pour véhicule automobile, comprenant un corps de logement de valves (1), servant à loger plusieurs valves d'entrée et de sortie (3, 4) et des conduits d'agent de pression (19, 20), un dispositif d'amenée de courant, servant à appliquer un courant aux valves d'entrée et de sortie (3, 4) à actionnement électromagnétique, et une valve à glissement (2) à actionnement hydraulique qui est montée d'une manière intégrée dans un alésage récepteur (14) ménagé dans le corps de logement de valves (1) et qui assure, en fonction de la position de commutation des valves d'entrée et de sortie (3, 4), la régulation du volume d'agent de pression entre une source d'agent de pression (6) et un utilisateur d'agent de pression (16), tandis que des conduits d'agent de pression (19) débouchent dans l'alésage récepteur (14) face aux deux surfaces frontales (17, 18) de la valve à glissement (2), ces conduits d'agent de pression (19) étant reliés hydrauliquement à l'utilisateur d'agent de pression (16) par l'intermédiaire d'une valve d'entrée (3) qui, dans son état de repos, est commutée en position de passage sans obstacle, l'utilisateur d'agent de pression (16) étant relié au raccord d'utilisateur d'agent de pression de la valve d'entrée (3) et la valve à glissement (2) comportant une gorge annulaire (7) qui est pourvue d'une arête de commande (9) et relie la source d'agent de pression (6) à la valve d'entrée (3) par l'intermédiaire d'un conduit d'arrivée (8) débouchant dans l'alésage récepteur (14), caractérisé en ce qu'il est prévu, montée dans l'alésage récepteur (14), au moins une garniture annulaire d'étanchéité (10) qui, dans la position hydrauliquement actionnée de la valve de glissement (2), bloque la liaison hydraulique allant de la source d'agent de pression (6) au raccord de source d'agent de pression de la valve d'entrée (3) et libère la liaison hydraulique du raccord de source d'agent de pression de la valve d'entrée (3) à la source d'agent de pression (6) (figure 1 à 4).

2. Dispositif de régulation de pression de freinage selon la revendication 1, caractérisé en ce qu'il est prévu deux garnitures annulaires d'étanchéité (10, 10') qui sont situées sur la valve à glissement (2) de part et d'autre de la gorge annulaire (7) (figure 2).

3. Dispositif de régulation de pression de freinage selon la revendication 1 ou 2, caractérisé en ce que la garniture annulaire d'étanchéité (10) est montée dans une autre gorge annulaire (12), prévue sur la valve à glissement (2), qui est agencée de façon à pouvoir être amenée en recouvrement avec le conduit d'arrivée (8) de la source d'agent de pression (6) (figures 1, 2).

4. Dispositif de régulation de pression de freinage selon la revendication 1, caractérisé en ce que la garniture annulaire d'étanchéité (10) est fixée au contour périphérique extérieur d'un manchon de guidage (21) qui sert à loger la valve à glissement (2) et qui est agencé de façon à pouvoir être amené en prise avec un épaulement de boîtier de l'alésage récepteur (14) (figure 3).

5. Dispositif de régulation de pression de freinage selon la revendication 4, caractérisé en ce que le manchon de guidage (21) comporte un filtre annulaire (22) qui est positionné entre le conduit d'arrivée (8) et la gorge annulaire (7) comportant l'arête de commande (9) (figure 3).

6. Dispositif de régulation de pression de freinage selon la revendication 1, caractérisé en ce que la garniture annulaire d'étanchéité (10) est fixée, dans la section de l'alésage récepteur (14) agencé de façon à pouvoir être raccordée à la valve d'entrée (3), sur un manchon de guidage (21) (figure 3).

7. Dispositif de régulation de pression de freinage selon la revendication 6, caractérisé en ce qu'un espace annulaire (5), qui est agencé de façon à pouvoir être obturé par la garniture annulaire d'étanchéité (10), est prévu entre le manchon de guidage (21) et l'alésage récepteur (14) (figure 3).

8. Dispositif de régulation de pression de freinage selon la revendication 6, caractérisé en ce que l'alésage récepteur (14) est réalisé sous forme d'un alésage étagé, plus large vers l'extérieur, qui est agencé de façon à pouvoir être amené en prise, par sections et par complémentarité de formes, avec la surface périphérique du manchon de guidage (21) (figure 3).

9. Dispositif de régulation de pression de freinage selon la revendication 1, caractérisé en ce qu'il est prévu, entre la première gorge annulaire (7) et un élément d'étanchéité (15) assurant l'étanchéité de la valve à glissement (2) vis-à-vis de l'alésage récepteur (14), un étage de pré-étranglement (23) qui, lors d'un recouvrement de l'élément d'étanchéité (15) avec le conduit d'arrivée (8) de la source d'agent de pression (6), réalise un équilibre de pression de part et d'autre de l'élément d'étanchéité (15).

10. Dispositif de régulation de pression de freinage selon la revendication 9, caractérisé en ce que l'étage de pré-étranglement (23) prévu à l'endroit de la première gorge annulaire (7) comporte un intervalle annulaire défini qui est formé entre une nervure, réalisée sur la valve à glissement (2), et l'alésage récepteur (14).

11. Dispositif de régulation de pression de freinage selon la revendication 9, caractérisé en ce que l'élément d'étanchéité est réalisé sous forme d'une coupelle d'étanchéité ayant une action de blocage, de la source d'agent de pression (6) vers la valve d'entrée (3).
